# EUROPEAN PATENT APPLICATION

(11) **EP 4 404 056 A1**
(43) Date of publication of application: **24.07.2024**
(21) Application number: 22869081.4
(22) Date of filing: 07.09.2022
(51) Int. Cl.: G06F 9/451

(54) **INFORMATION DISPLAY METHOD AND APPARATUS, ELECTRONIC DEVICE, AND STORAGE MEDIUM**

(30) Priority: 14.09.2021 CN 202111076711
(71) Applicant: Vivo Mobile Communication Co., Ltd., Dongguan, Guangdong 523863 (CN)
(72) Inventor: XUE, Xinglong, Dongguan, Guangdong 523863 (CN)
(74) Representative: Lavoix
(86) International application number: PCT/CN2022/117410
(87) International publication number: WO 2023/040710

(57) **Abstract**

This application pertains to the field of computer technologies, and specifically relates to an information display method and apparatus, an electronic device, and a storage medium. The information display method includes: displaying a first interface corresponding to a first type module in a first application; receiving a first input performed by a user; and displaying an interface corresponding to the first type module in a second application in response to the first input.

## Description

### CROSS-REFERENCE TO RELATED APPLICATIONS

This application claims priority to Chinese Patent Application No. 202111076711.3, entitled "INFORMATION DISPLAY METHOD AND APPARATUS, ELECTRONIC DEVICE, AND STORAGE MEDIUM", filed on September 14, 2021, which is incorporated herein by reference in its entirety.

### TECHNICAL FIELD

This application pertains to the field of computer technologies, and in particular, to an information display method and apparatus, an electronic device, and a storage medium.

### BACKGROUND

With rapid development of electronic devices, there are more and more applications, and users can view information they want in different applications.

Because different applications (Application, APP) of a same type provide different information, when a user needs to view different content, the user needs to switch between different applications. For example, a video application has different modules, such as a binge-watch module, a favorite module, and a history module, and different applications have different video information. In a case that the user is currently viewing video information in a first application, if the user wants to view video information in a second application, the user needs to exit the first application, and then enter the second application to view the video information in the second application. This manner of viewing information is cumbersome, which affects user experience.

### SUMMARY

Embodiments of this application provide an information display method and apparatus, an electronic device, and a storage medium, to resolve a problem that a manner of viewing information is cumbersome and user experience is low in the related art.

According to a first aspect, an embodiment of this application provides an information display method. The method includes:
displaying a first interface corresponding to a first type module in a first application;
receiving a first input performed by a user; and
displaying an interface corresponding to the first type module in a second application in response to the first input.

According to a second aspect, an embodiment of this application provides an information display apparatus. The apparatus includes:
a display module, configured to display a first interface corresponding to a first type module in a first application; and
a receiving module, configured to receive a first input performed by a user, where
the display module is further configured to display an interface corresponding to the first type module in a second application in response to the first input.

According to a third aspect, an embodiment of this application provides an electronic device. The electronic device includes a processor, a memory, and a program or an instruction that is stored in the memory and that can be run on the processor, and the program or the instruction is executed by the processor to implement the step of the information display method according to the first aspect.

According to a fourth aspect, an embodiment of this application further provides an electronic device, configured to perform the steps of the information display method according to the first aspect.

According to a fifth aspect, an embodiment of this application provides a readable storage medium, where a program or an instruction is stored on the readable storage medium, and the program or the instruction is executed by a processor to implement the steps of the information display method according to the first aspect.

According to a sixth aspect, an embodiment of this application provides a computer program product, which may be performed by a processor to implement the steps of the information display method according to the first aspect.

According to a seventh aspect, an embodiment of this application provides a chip. The chip includes a processor and a communication interface, the communication interface is coupled to the processor, and the processor is configured to run a program or an instruction to implement the information display method according to the first aspect.

In the embodiments of this application, a first interface corresponding to a first type module in a first application is displayed, a first input performed by a user is received, and an interface corresponding to the first type module in a second application is displayed in response to the first input. Therefore, when content corresponding to the first type module in the first application is displayed on the first interface, switching to the interface corresponding to the first type module in the second application can be quickly implemented in response to the first input performed by the user. Therefore, the user can quickly switch from the first application to the second application. In this way, according to the solution in the embodiments of this application, in a case that the user wants to view content of the second application when viewing content in the first application, the user may quickly switch to the second application without exiting the first application, which is simple and convenient to operate, thereby improving user experience.

### BRIEF DESCRIPTION OF DRAWINGS

To describe the technical solutions in embodiments of this application or in the related art more clearly, the following briefly describes the accompanying drawings required for describing the embodiments or the related art. Apparently, the accompanying drawings in the following description show merely some embodiments of this application, and a person of ordinary skill in the art may still derive other drawings from these accompanying drawings without creative efforts.
FIG. 1 is a flowchart of an information display method according to an example embodiment;
FIG. 2 is a first schematic diagram of display of a first interface according to an example embodiment;
FIG. 3 is a first schematic diagram of arrangement of applications corresponding to N icons and each type module in an application corresponding to each icon according to an example embodiment;
FIG. 4 is a second schematic diagram of display of a first interface according to an example embodiment;
FIG. 5 is a second schematic diagram of arrangement of applications corresponding to N icons and each type module in an application corresponding to each icon according to an example embodiment;
FIG. 6 is a third schematic diagram of display of a first interface according to an example embodiment;
FIG. 7 is a fourth schematic diagram of display of a first interface according to an example embodiment;
FIG. 8 is a fifth schematic diagram of display of a first interface according to an example embodiment;
FIG. 9 is a sixth schematic diagram of display of a first interface according to an example embodiment;
FIG. 10 is a structural block diagram of an information display apparatus according to an example embodiment;
FIG. 11 is a structural block diagram of an electronic device according to an example embodiment; and
FIG. 12 is a schematic diagram of a hardware structure of an electronic device according to an embodiment of this application.

### DESCRIPTION OF EMBODIMENTS

The following describes in detail features and example embodiments of various aspects of this application. To make purposes, technical solutions, and advantages of this application clearer, the following further describes this application in detail with reference to the accompanying drawings and specific embodiments. It should be understood that the specific embodiments described herein are merely intended to explain this application, but are not intended to limit this application. For a person skilled in the art, this application may be implemented without requiring some details in these specific details. The following descriptions of the embodiments are merely intended to provide a better understanding of this application by using examples shown in this application.

It should be noted that in this specification, relational terms such as first and second are only used to distinguish one entity or operation from another, and do not necessarily require or imply that any actual relationship or sequence exists between these entities or operations. In addition, the terms "include", "contain", or their any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

As above mentioned, in the related art, information provided by different applications of a same type is different. Therefore, when a user needs to view different content, switching between different applications needs to be performed. In this information viewing manner, operations are cumbersome, which affects user experience.

For the problem in the related art, the embodiments of this application provide an information display method. A first interface corresponding to a first type module in a first application is displayed, a first input performed by a user is received, and an interface corresponding to the first type module in a second application is displayed in response to the first input. Therefore, when content corresponding to the first type module in the first application is displayed on the first interface, switching to the interface corresponding to the first type module in the second application may be quickly performed in response to the first input performed by the user. Therefore, the user can quickly switch from the first application to the second application. In this way, through the solution in the embodiments of this application, in a case that the user wants to view content of the second application when viewing content in the first application, the user may quickly switch to the second application without exiting the first application, which is simple and convenient to operate, thereby improving user experience.

With reference to the accompanying drawings, the following describes in detail the information display method in the embodiments of this application based on specific embodiments and application scenes thereof.

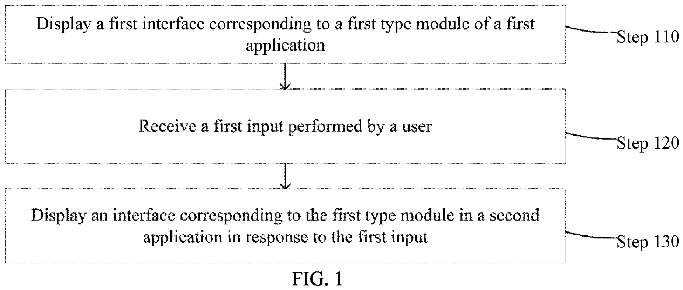

FIG. 1 is a schematic flowchart of an information display method according to an embodiment of this application. The information display method may be executed by an electronic device or a server. It should be noted that the foregoing execution subject does not constitute a limitation on this application.

As shown in FIG. 1, the information processing method provided in this embodiment of this application may include step 110 to step 130.

Step 110: Display a first interface corresponding to a first type module in a first application.

The first interface may include N application identifiers and M type module identifiers corresponding to each of the application identifiers, where M and N are positive integers.

Step 120: Receive a first input performed by a user.

Step 130: Display an interface corresponding to the first type module in a second application in response to the first input.

In this embodiment of this application, a first interface corresponding to a first type module in a first application is displayed, a first input performed by a user is received, and an interface corresponding to the first type module in a second application is displayed in response to the first input. Therefore, when content corresponding to the first type module in the first application is displayed on the first interface, switching to the interface corresponding to the first type module in the second application may be quickly performed in response to the first input performed by the user. Therefore, the user can quickly switch from the first application to the second application. In this way, through the solution in the embodiments of this application, in a case that the user wants to view content of the second application when viewing content in the first application, the user may quickly switch to the second application without exiting the first application, which is simple and convenient to operate, thereby improving user experience.

The following describes in detail the information display method provided in the embodiments of this application.

Step 110 is first described, and the first interface corresponding to the first type module in the first application is displayed.

The first application may be any application downloaded on an electronic device of the user.

In some embodiments of this application, the electronic device may be but is not limited to a personal computer (Personal Computer, PC), a smartphone, a tablet computer, a personal digital assistant (Personal Digital Assistant, PDA), or the like.

The first type module may be any type module in the first application.

In an example, the first application is a video application. There are a plurality of type modules in the first application, for example, "My favorite", "Watch history", and "Download center", and the first type module may be "My favorite", "Watch history", or "Download center".

In some embodiments of this application, the first interface may include N icons, an application corresponding to each icon has a plurality of type modules, and N is a positive integer.

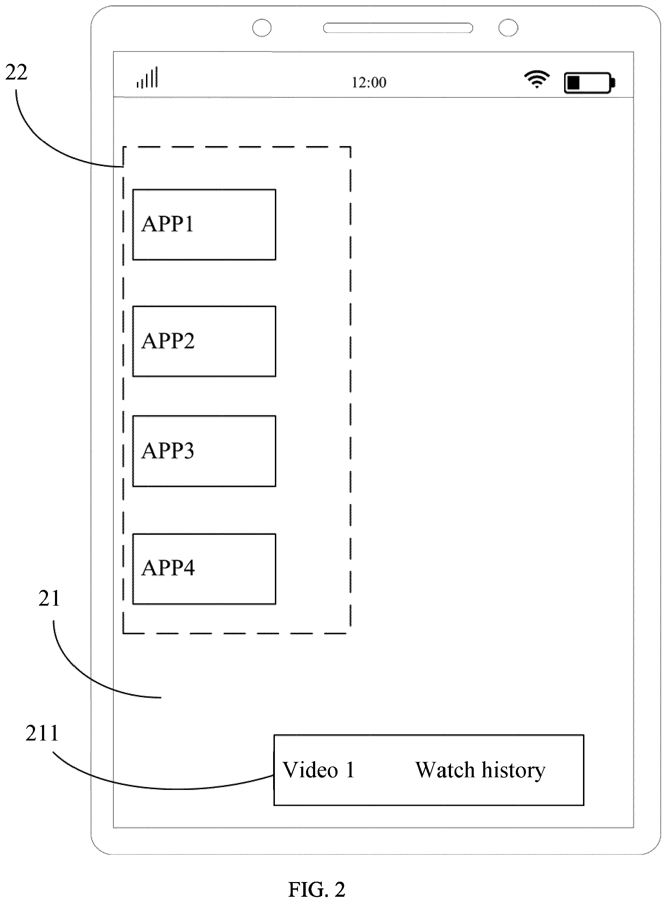

In an example, the first interface may be an interface 21 shown in FIG. 2, and there are four icons (APP1, APP2, APP3, and APP4) on the first interface. The four icons are respectively corresponding to different applications, that is, an application 1, an application 2, an application 3, and an application 4.

It should be noted that, in some embodiments of this application, N applications corresponding to the N icons on the first interface may be applications of a same type, for example, may be applications of a video type or applications of a chat communication type.

In some embodiments of this application, the first interface may be an interface corresponding to the first type module in the first application. For example, if the first application is a video application, and the first type module is a "Watch history" type module, a video frame image in the watch history type module is displayed on the first interface.

In some embodiments of this application, a video picture in the first type module displayed on the first interface may be a video frame image of any video in the first type module, or may be a video frame image of a recently updated video in the first type module.

In an example, the first application is a video application 1, and the first type module is a type module "Watch history". If the user previously watches four videos "video 1", "video 2", "video 3", and "video 4", a video frame image of any one of "video 1", "video 2", "video 3", and "video 4" may be displayed on the first interface, or an image of a video that the user recently watches may be displayed on the first interface. For example, if the user has just watched "video 1", and "video 1" in the type module "Watch history" is a latest updated video, a video frame image of "video 1" that the user has recently watched may be displayed on the first interface. Specifically, a video frame image that is of the first type module in the first application and that is displayed on the first interface is a video frame image of any video in the first type module, or a video frame image of a recently updated video in the first type module. This may be set according to a user requirement, and is not limited herein.

In some embodiments of this application, the first type module may be alternatively displayed on the first interface.

In an example, as shown in FIG. 2, when the first interface corresponding to the first type module in the first application is displayed, icons 22 (that is, APP1, APP2, APP3, and APP4) may be displayed on the first interface 21. The icon APP1 corresponds to an application 1, the icon APP2 corresponds to an application 2, the icon APP3 corresponds to an application 3, and the icon APP4 corresponds to an application 4. The first interface is an interface corresponding to the first type module in the first application (for example, the application 1). Therefore, the first type module may be displayed in any area of the first interface 21. Specifically, the first type module may be displayed in an area 211 of the first interface. Specifically, an icon of the first type module or a name of the first type module may be displayed.

In another example, referring to the foregoing example again, when the icon or the name of the first type module is displayed in FIG. 2, a name of content displayed on the first interface may be further displayed in another area (which may be an area 211, or may be an area different from the area 211). For example, as shown in FIG. 2, an application corresponding to each icon may be a video application, that is, applications corresponding to the icons APP1, APP2, APP3, and APP4 may all be video applications. Taking APP1 in FIG. 2 as an example, APP1 may be an icon corresponding to a video application, and the application corresponding to APP1 includes three type modules: "My favorite", "Watch history", and "Download center". For example, the first interface is an interface corresponding to "Video 1" in the type module "Watch history" in the application corresponding to the icon APP1. In this case, the name "Watch history" and the name "Video 1" may be displayed in the area 211 in FIG. 2, and a video frame image of "Video 1" is displayed in another area of the first interface.

In another example, a latest updated episode of "Video 1" in the type module "Watch history" may be further displayed in the area 211 in FIG. 2. For example, if the user is currently watching an episode 4 of the video 1, "Watch history", the name "Video 1", and "Episode 4" may be displayed in the area 211.

In some embodiments of this application, the N icons on the first interface may be arranged in a first sorting sequence, and a plurality of type modules of an application corresponding to each icon are arranged in a second sorting sequence.

The first sorting sequence may be a preset sorting sequence.

The second sorting sequence may be another preset sorting sequence.

In an example, the first sorting sequence may be a sorting sequence APP1-APP2-APP3-APP4 in FIG. 2.

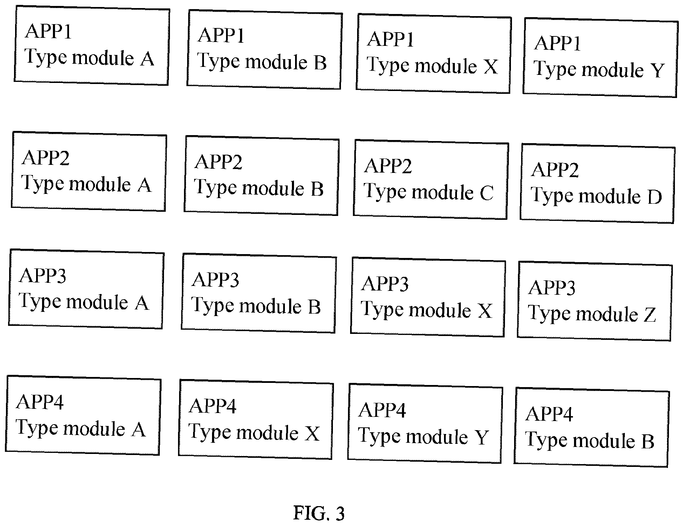

In another example, as shown in FIG. 3, there are four icons APP1, APP2, APP3, and APP4 on the first interface. A sorting sequence of APP1, APP2, APP3, and APP4 is APP1-APP2-APP3-APP4. The icon APP1 corresponds to an application 1, the icon APP2 corresponds to an application 2, the icon APP3 corresponds to an application 3, and the icon APP4 corresponds to an application 4. The application 1 includes four type modules A, B, X, and Y, the application 2 includes four type modules A, B, C, and D, the application 3 includes four type modules A, B, X, and Z, and the application 4 includes four type modules A, X, Y, and B. The plurality of type modules of the application corresponding to each icon are arranged in the second sorting sequence. Specifically, a sorting sequence of the type modules in the application 1 is A-B-X-Y, a sorting sequence of the type modules in the application 2 is A-B-C-D, a sorting sequence of the type modules in the application 3 is A-B-X-Z, and a sorting sequence of the type modules in the application 4 is A-X-Y-B. Which means, for the application 1, the second sorting sequence is A-B-X-Y; for the application 2, the second sorting sequence is A-B-C-D; for the application 3, the second sorting sequence is A-B-X-Z; and for the application 4, the second sorting sequence is A-X-Y-B.

In some embodiments of this application, the N icons included in the first interface may be arranged in the first sorting sequence in a specified direction, for example, arranged in the first sorting sequence in a vertical direction (as shown in FIG. 3), and the plurality of type modules of the application corresponding to each icon may be arranged in the second sorting sequence in another direction, for example, arranged in the second sorting sequence in a horizontal direction (as shown in FIG. 3).

In some embodiments of this application, N applications of a same type corresponding to the N icons may need to be obtained in order to determine the N icons on the first interface. A specific determining manner may be as follows: A detection module of the electronic device is used to detect applications installed on the electronic device, and identify applications of a same type that meet a user requirement. For example, if the user wants to identify a video application, according to classification in an application store, the video application installed on the electronic device may be identified from the applications installed on the electronic device.

In some embodiments of this application, N applications of a same type are identified, and then icons corresponding to the N applications are sorted.

In some embodiments of this application, the second sorting sequence may be performing sorting according to a user requirement, or performing sorting according to a system default sorting manner of each type module in an application. For example, for any video application 1, the application 1 includes three type modules: "My favorite", "Watch history", and "Download center". If a sorting manner of the three type modules is "My favorite" - "Watch history" - "Download center" by default, the second sorting sequence of the type modules in the application 1 is "My favorite" - "Watch history" - "Download center". Specifically, whether the second sorting sequence is performing sorting according to the user requirement or the system default sorting manner is not limited herein.

In some embodiments of this application, the first sorting sequence may be determined in the following two manners:
(1) Being determined based on a sequence of installation times of the N applications corresponding to the N icons.
   In some embodiments of this application, the first sorting sequence is determined according to the sequence of the installation times of the N applications corresponding to the N icons. For example, an application with an earlier installation time is placed in front of an application with a later installation time.
(2) Being determined based on a similarity between type modules in another application and type modules in a reference application.

The reference application may be one of the N applications corresponding to the N icons, and is in a preset location in the first sorting sequence.

The another application may be an application other than the reference application in the N applications.

In some embodiments of this application, the preset location may be a predetermined location, for example, may be a first location in the first sorting sequence, or may be a last location in the first sorting sequence. A specific preset sequence may be set according to a user requirement, and is not limited herein.

In some embodiments of this application, the reference application is first selected, and the reference application is placed in the preset location in first sorting sequence, and then a sorting sequence of the another application is determined according to the similarity between the type modules in the another application and the type modules in the reference application, to determine the first sorting sequence.

The following describes in detail a manner of determining the reference application. Specifically, there may be the following two manners:
(a) Determine the reference application based on time points at which the N applications corresponding to the N icons are accessed through a component.

The component may be a module that gathers the N icons and the plurality of type modules corresponding to each application.

In some embodiments of this application, a component may be equivalent to a box, and the N icons and the plurality of type modules in the application corresponding to each icon are randomly placed in the box. In this case, if the user needs to view information by using an application corresponding to one of the icons, the application may be accessed by using the component. In this way, the reference application may be determined based on the time points at which the N applications corresponding to the N icons are accessed through the component. Specifically, the application that is accessed first through the component may be determined as the reference application, or the application that is accessed second through the component may be determined as the reference application. Specifically, how to determine the reference application according to the time points at which the N applications corresponding to the N icons are accessed through the component may be set according to a user requirement, which is not limited herein.
(b) Determine the reference application based on installation times of the N applications corresponding to the N icons in the electronic device.

In some embodiments of this application, the reference application is determined according to a time sequence of installing the N applications corresponding to the N icons by the user. For example, an application with an earliest installation time may be determined as the reference application, or an application with a latest installation time may be determined as the reference application. Specifically, how to determine the reference application according to the time sequence of installing the N applications corresponding to the N icons by the user may be selected according to a user requirement, which is not limited herein.

The following describes in detail a sorting sequence of another application based on a similarity between type modules in the another application and type modules in the reference application. A specific determining manner may include the following two manners:
(i) Being determined based on a quantity of type modules of a same type in type modules in another application and type modules in the reference application.

In some embodiments of this application, for any other application, a sorting sequence of the another application is determined according to a quantity of type modules of a same type in type modules in the another application and type modules in the reference application.

In an example, the reference application is an application 1, and the reference application is located in a first location in the first sorting sequence. The application 1 has four type modules A, B, X, and Y. Other applications are respectively an application 2, an application 3, and an application 4, where the application 2 has four type modules A, B, X, and Z, the application 3 has four type modules A, B, X, and Z, and the application 4 has four type modules A, X, Y, and B. A quantity of type modules of a same type in the application 2 and the application 1 is 2 (A and B), a quantity of type modules of a same type in the application 3 and the application 1 is 3 (A, B and X), and a quantity of type modules of a same type in the application 4 and the application 1 is 4 (A, X, Y and B). Therefore, sorting may be performed based on quantities of type modules of a same type in type modules in the other applications and type modules in the reference application. For example, sorting may be performed in descending order of the quantities of type modules of the same type in the type modules in the other applications and the type modules in the reference application. That is, a sorting sequence of the other applications is the application 4-the application 3-the application 2, and therefore the final first sorting sequence is the application 4-the application 3-the application 2.

It should be noted that the foregoing enumerated sorting in descending order of quantities is merely an example of this embodiment of this application. A person skilled in the art should know that sorting is not limited thereto, and sorting may also be performed in ascending order of quantities. This may be set according to a user requirement herein, and is not limited herein.

It should be noted that, in a case that quantities of type modules of a same type in type modules in at least two other applications and type modules in the reference application are the same, another application with an earlier installation time may be placed in front of another application with a later installation time.

In an example, referring to the foregoing example again, if there are two type modules of a same type in the application 2 and the application 1, and there are two type modules of a same type in the application 3 and the application 2, sorting of the application 2 and the application 3 may be determined by using installation times of the application 2 and the application 3. For example, if an installation time of the application 2 is earlier than an installation time of the application 3, sorting of the application 2 and the application 3 is determined according to the installation times of the application 2 and the application 3. For example, an application with an earlier installation time is placed more forward, that is, the application 2 is placed in front of the application 3.

It should be noted that, determining sorting of other applications based on installation times of the other applications in a case that quantities of type modules of a same type in type modules in at least two other applications and type modules in the reference application are the same is only an example of this embodiment of this application. A person skilled in the art should know that the sorting of the other applications may be determined in another manner. For example, the sorting of the other applications may be determined based on when the applications are last viewed. For example, if a quantity of type modules of a same type in the application 2 and the application 1 is 2, a quantity of type modules of a same type in the application 3 and the application 1 is also 2, and the latest application watched by the user is the application 2, then the application 2 may be placed in front of the application 3. Specifically, how to determine sorting of other applications in a case that quantities of type modules of a same type in type modules in at least two other applications and type modules in the reference application are the same may be set according to a user requirement, and is not limited herein.

(ii) Being determined based on a quantity of type modules that are of a same type and have a same second sorting sequence in type modules in another application and type modules in the reference application.

In some embodiments of this application, for any other application, a sorting sequence of the another application is determined according to a quantity of type modules that are of a same type and have a same second sorting sequence in type modules in the another application and type modules in the reference application.

In an example, the reference application an application 1, and the reference application is located in a first location in the first sorting sequence. The application 1 has four type modules A, B, X, and Y, where a sorting manner (that is, the second sorting sequence) of the four type modules in the application 1 is A-B-X-Y. Other applications are respectively an application 2, an application 3, and an application 4, where the application 2 has four type modules A, B, C, and D, and a sorting manner (that is, the second sorting sequence) of the four type modules in the application 2 is A-B-C-D; the application 3 has four type modules A, B, X, and Z, and a sorting manner (that is, the second sorting sequence) of the four type modules in the application 3 is A-B-X-Z; and the application 4 has four type modules A, X, Y, and B, and a sorting manner (that is, the second sorting sequence) of the four type modules in the application 4 is A-X-Y-B. A quantity of type modules that are of a same type and have a same second sorting sequence in the application 2 and the application 1 is 2 (A and B), a quantity of type modules that are of a same type and have a same second sorting sequence in the application 3 and the application 1 is 3 (A, B, and X), and a quantity of type modules that are of a same type and have a same second sorting sequence in the application 4 and the application 1 is 1 (A). Therefore, sorting may be performed according to quantities of type modules that are of a same type and have a same second sorting sequence in type modules in the other applications and type modules in the reference application. For example, sorting may be performed in descending order of the quantities of type modules that are of a same type and have a same second sorting sequence in the type modules in the other applications and the type modules in the reference application. That is, a sorting sequence of the other applications is the application 3-the application 2-the application 4, and therefore the final first sorting sequence is the application 1-the application 3-the application 2-the application 4.

It should be noted that the foregoing enumerated sorting in descending order of quantities is merely an example of this embodiment of this application. A person skilled in the art should know that sorting is not limited thereto, and sorting may also be performed in ascending order of quantities. This may be set according to a user requirement herein, and is not limited herein.

It should be noted that, in a case that quantities of type modules that are of a same type and have a same second sorting sequence in type modules in at least two other applications and type modules in the reference application are the same, another application with an earlier installation time may be placed in front of another application with a later installation time. For a specific example, refer to (i). Details are not described herein again.

It should be noted that, determining sorting of other applications based on installation times of the other applications in a case that quantities of type modules that are of a same type and have a same second sorting sequence in type modules in at least two other applications and type modules in the reference application are the same is only an example of this embodiment of this application. A person skilled in the art should know that the sorting of the other applications may be determined in another manner. For example, the sorting of the other applications may be determined based on when the applications are last viewed. Specifically, how to determine sorting of other applications in a case that quantities of type modules that are of a same type and have a same second sorting sequence in type modules in at least two other applications and type modules in the reference application are the same may be set according to a user requirement, and is not limited herein.

In this embodiment of this application, the first interface includes the N icons, the application corresponding to each icon has a plurality of type modules, the N icons are arranged in the first sorting sequence, and the first sorting sequence may be determined based on a similarity between type modules in another application and type modules in the reference application. Therefore, a sorting sequence of N application identifiers can be accurately determined.

In some embodiments of this application, according to the information display method in this application described above, information about two dimensions, that is, applications corresponding to the N icons and type modules in the application corresponding to each icon, is included. However, a person skilled in the art should know that dimension information in this application is not limited to the information about the two dimensions, or may be information about more than two dimensions. A display manner is similar to that of the information about the two dimensions enumerated in the embodiments of this application, and details are not described herein again. Specific displayed dimension information may be set according to a user requirement, and is not limited herein.

In some embodiments of this application, the foregoing two directions in FIG. 3 are arranged in a "cross" shape. However, a person skilled in the art should know that this application is not limited to the "cross" arrangement, and there may be another arrangement shape, which is not limited here.

In some embodiments of this application, to further improve user experience, after step 110, the information display method may further include:
receiving editing information of the user for a target type module in a target application, and editing the target type module based on the editing information.

The target application may be one of the N applications corresponding to the N icons, and the target type module may be one of all type modules in the target application.

The editing information may be information for editing the target type module in the target application, for example, may be adding information or deletion information.

In some embodiments of this application, in a case that the editing information is adding information, the receiving editing information of the user for a target type module in a target application, and editing the target type module based on the editing information may include: receiving adding information of the user for a third type module, and adding the third type module to the target application based on the adding information.

The third type module may be a type module other than all type modules in the target application.

The adding information may be information for adding the third type module to the target application.

In some embodiments of this application, when the third type module is added to the target application, the third type module may be added to a specified location, or the third type module may be added to any location.

In an example, the target application has four type modules A, B, C, and D, and sorting of the four type modules is A-B-C-D. If a third type module Q is added to the target application, the third type module Q may be added between type modules A and B, or the third type module Q may be added to any location.

In some embodiments of this application, after the third type module is added to the target application, the third type module may be displayed on the first interface.

In some embodiments of this application, in a case that the editing information is deletion information, the receiving editing information of the user for a target type module in a target application, and editing the target type module based on the editing information may include: receiving deletion information of the user for a fourth type module in the target application, and deleting the fourth type module from the target application based on the deletion information.

The deletion information may be information for deleting the fourth type module from the target application.

In an example, the target application has four type modules A, B, C, and D, and sorting of the four type modules is A-B-C-D. If the fourth type module A is deleted from the target application, there are only three type modules B, C, and D in the target application in this case.

In some embodiments of this application, if there is no content of a type module in an application, content of a previous type module of the type module is displayed on the first interface. Further, if there is no content of the previous type module, content of a next type module of the type module is displayed. If there is no content of all type modules of the application, content of a first type module (that is, a type module arranged first in the second sorting sequence) in the previous application of the application is displayed; or if there is no content of all type modules of the application, a first type module in a next application of the application is displayed.

In an example, there are four icons APP1, APP2, APP3, and APP4 on the first interface, where the icon APP1 corresponds to an application 1, the icon APP2 corresponds to an application 2, the icon APP3 corresponds to an application 3, and the icon APP4 corresponds to an application 4. The application 1 has four type modules A, B, X, and Y, and a sorting manner (that is, the second sorting sequence) of the four type modules in the application 1 is A-B-X-Y. Other applications are respectively an application 2, an application 3, and an application 4, where the application 2 has four type modules A, B, C, and D, and a sorting manner (that is, the second sorting sequence) of the four type modules in the application 2 is A-B-C-D; the application 3 has four type modules A, B, X, and Z, and a sorting manner (that is, the second sorting sequence) of the four type modules in the application 3 is A-B-X-Z; and the application 4 has four type modules A, X, Y, and B, and a sorting manner (that is, the second sorting sequence) of the four type modules in the application 4 is A-X-Y-B. If the first interface currently displays a video frame image in a type module B in the application 2, and the user deletes the video frame image in the type module B in the application 2, the first interface may display a video frame image in a type module A in the application 2. If there is no content of the type module A in the application 2, a video frame image in a type module C in the application 2 may be displayed. If there is no content of all type modules in the application 2, content of a type module A in the application 1 is displayed. If there is no content of all type modules in the application 1, content of a type module A in the application 3 is displayed.

In this embodiment of this application, editing information of the user for the target type module in the target application is received, and the target type module is edited based on the editing information. In this way, editing of a type module is implemented, thereby improving user experience.

In some embodiments of this application, to further improve user experience, after step 110, the information display method may further include:
in a case that content of a target type module in a target application is updated, displaying updated content of the target type module.

The target application may be one of the N applications corresponding to the N icons, and the target type module may be one of all type modules in the target application.

In an example, the target application is an application 1, the target type module is a type module A in the application 1, and content of the type module A includes a video 1, a video 2, and a video 3. If the first interface displays an image frame of the video 1, and if the user adds the video 4 to the type module A, that is, content of the type module A is updated, the image frame of the video 1 displayed on the first interface is replaced with an image frame in the video 4, that is, updated content of the target type module is displayed.

In this embodiment of this application, in a case that the content of the target type module in the target application is updated, and the updated content of the target type module is displayed. Therefore, the user can intuitively view that the content of the target type module in the target application is updated and the specific updated content, and does not need to open applications and type modules one by one to view that content of a type module in which application is updated, thereby improving user experience.

Next, step 120 in which the first input performed by the user is received is described.

The first input may be performed to convert a display interface corresponding to the first type module in the first application into a display interface corresponding to the first type module in the second application. The first input may be a slide input, a tap input, a double-tap input, or the like performed by the user on the first interface, or may be a combination of at least two types of the foregoing inputs. This is not limited in this application.

Finally, step 130 in which the interface corresponding to the first type module in the second application is displayed in response to the first input is described.

The second application may be an application different from the first application and belongs to a same type as the first application.

In this embodiment of this application, a first interface corresponding to a first type module in a first application is displayed, a first input performed by a user is received, and an interface corresponding to the first type module in a second application is displayed in response to the first input. Therefore, when content corresponding to the first type module in the first application is displayed on the first interface, switching to the interface corresponding to the first type module in the second application can be quickly implemented in response to the first input performed by the user. Therefore, the user can quickly switch from the first application to the second application. In this way, according to the solution in the embodiments of this application, in a case that the user wants to view content of the second application when viewing content in the first application, the user may quickly switch to the second application without exiting the first application, which is simple and convenient to operate, thereby improving user experience.

In some embodiments of this application, as shown in FIG. 3, the N icons on the first interface and the plurality of type modules of the application corresponding to each icon are displayed in a matrix form.

In some embodiments of this application, to accurately display the interface corresponding to the first type module in the second application, step 130 may further include the following two cases:
(1) In response to the first input, obtain interface content corresponding to the first type module in the second application, and display the interface corresponding to the first type module in the second application in a case that the interface content corresponding to the first type module in the second application is not empty.

In some embodiments of this application, the interface content corresponding to the first type module in the second application is obtained in response to the first input, that is, content corresponding to a type module that is in the second application and that is in a same location as the first type module in a sorting direction of the N icons is obtained, and the content is displayed.

In an example, as shown in FIG. 3, the first application is an application corresponding to an icon APP1, the application 1 has four type modules A, B, X, and Y, and a sorting manner (that is, the second sorting sequence) of the four type modules in the application 1 is A-B-X-Y; and the second application is an application corresponding to an icon APP2, the application 2 has four type modules A, B, C, and D, and a sorting manner (that is, the second sorting sequence) of the four type modules in the application 2 is A-B-C-D. In FIG. 3, the four type modules A, B, X, and Y in the application 1 and the four type modules A, B, C, and D in the application 2 are arranged in a matrix form, and the icon of the second application is adjacent to the icon of the first application in the first sorting sequence. If the first type module is the type module Y in the application 1, the type module corresponding to the first type module in the second application is the type module D in the application 2 in a same column as the type module Y in the application 1 in FIG. 3 (that is, a type module in the same location in the sorting direction of the N icons).

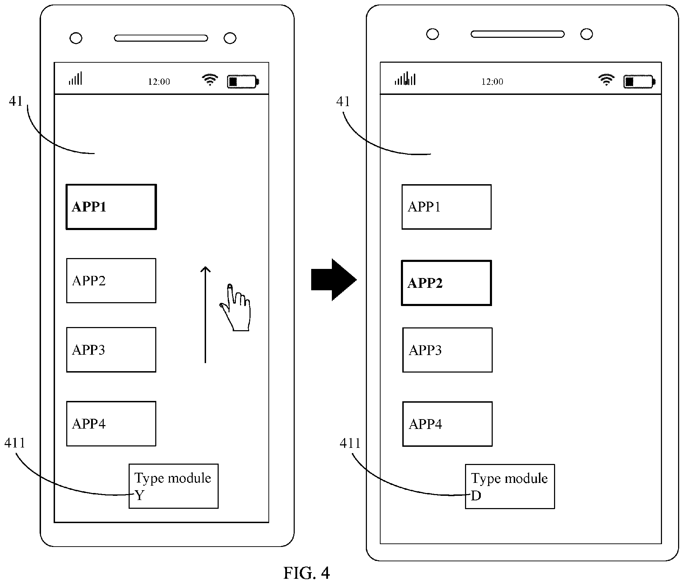

Referring to the foregoing example again, as shown in FIG. 4, in a case that a first interface 41 is an interface corresponding to the type module Y in the application 1, upward sliding is performed by the user, and in response to a first input of the upward sliding, content of the type module D that is in the second application and that is in the same location as the first type module, namely, the type module Y, is obtained in the sorting direction of the N icons. In a case that the content of the type module D is not empty, an interface corresponding to the type module D in the application 2 is displayed on the first interface, that is, the content of the type module D in the application 2 is displayed on the first interface. If a video 1 is updated in the type module D in the application 2, a video image of the video 1 is displayed on the first interface, and correspondingly, the original type module Y in the first application in an area 411 on the first interface 41 is replaced by the type module D in the second application.

In this embodiment of this application, the interface content corresponding to the first type module in the second application is obtained in response to the first input, and in a case that the interface content corresponding to the first type module in the second application is not empty, switching to the interface corresponding to the first type module in the second application can be quickly implemented. Therefore, the user can quickly switch from the first application to the second application. In this way, in a case that the user wants to view content of a type module corresponding to the first type module in the second application when viewing content in the first application, the user may quickly switch to the second application without exiting the first application, which is simple and convenient to operate, thereby improving user experience.

(2) In response to the first input, obtain interface content corresponding to the first type module in the second application, and display an interface corresponding to a second type module in the second application in a case that the interface content corresponding to the first type module in the second application is empty.

The second application includes the first type module and the second type module, the first type module is adjacent to the second type module in the second sorting sequence, and content of the interface corresponding to the second type module is not empty.

In some embodiments of this application, the content of the interface corresponding to the first type module in the second application is obtained in response to the first input, that is, content corresponding to a type module that is in the second application and that is in a same location as the first type module in a sorting direction of the N icons is obtained. If the content is empty, content of a non-empty second type module that is in the second application and that is adjacent to the first type module is obtained, and the content is displayed.

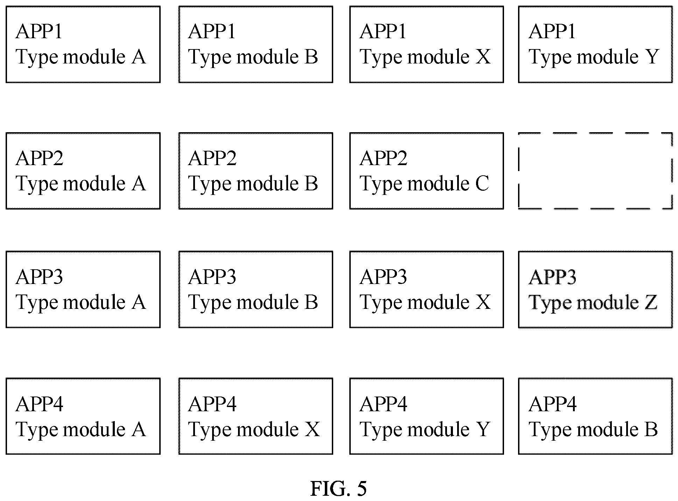

In an example, as shown in FIG. 5, the first application is an application 1 corresponding to an icon APP1, the application 1 has four type modules A, B, X, and Y, and a sorting manner (that is, the second sorting sequence) of the four type modules in the application 1 is A-B-X-Y; and the second application is an application 2 corresponding to an icon APP2, the application 2 has three type modules A, B, and C, and a sorting manner (that is, the second sorting sequence) of the three type modules in the application 2 is A-B-C. In FIG. 5, the four type modules A, B, X, and Y in the application 1 and the three type modules A, B, and C in the application 2 are arranged in a matrix form. If the first type module in the first application is the type module A in the application 1, the first type module in the second application is a type module in a same column as the type module Y in the application 1 in FIG. 5 (the type module does not exist, and is represented by a dotted line box in FIG. 5), and the second type module in the second application is the type module C in the application 2 (content of the type module C is not empty).

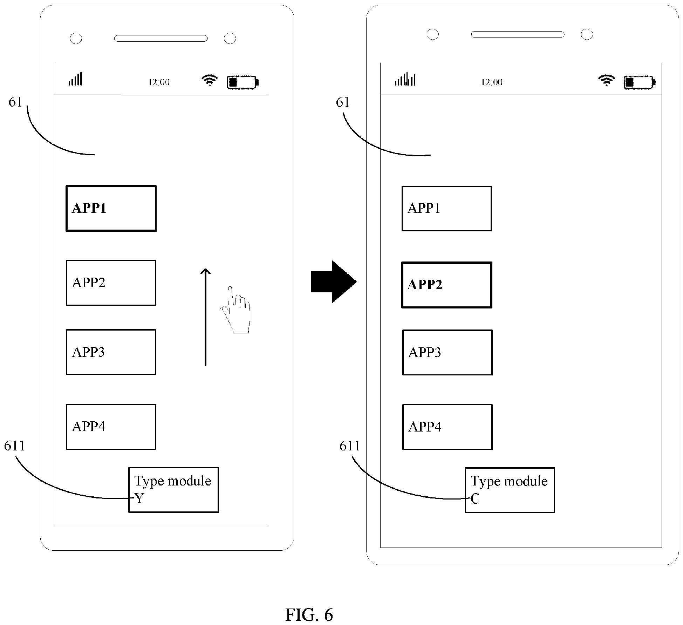

Referring to the foregoing example again, as shown in FIG. 6, in a case that a first interface 61 is an interface corresponding to the type module Y in the application 1 corresponding to the icon APP1, upward sliding is performed by the user. Because the content of the type module that is in the application 2 and that is in the same column as the type module Y in the application 1 is empty, there is no type module that is in the application 2 and that is in the same column as the type module Y in the application 1. Then in response to the upward sliding operation performed by the user, a non-empty type module that is in the application 2 and that is closest to a type module in the same column as the type module Y in the first application 1 in the second sorting sequence is displayed on the first interface, that is, content corresponding to the type module C in the application 2 is displayed, or in other words, the content of the type module C in the application 2 is displayed on the first interface. If a video 3 is updated in the type module C in the application 2, a video image of the video 3 is displayed on the first interface, and correspondingly, the original type module Y in the first application in an area 611 on the first interface 61 is replaced by the type module C in the second application.

It should be noted that, in a case that content of a type module in an application is empty, the type module is deleted from the application. As shown in FIG. 5, in the application 2 corresponding to the icon APP2, if content of a type module (that is, a type module corresponding to a dotted line box in FIG. 5) corresponding to the type module Y in the application 1 corresponding to the icon APP1 is empty, the type module (that is, the type module corresponding to the dotted line box in FIG. 5) does not exist in the application.

In some embodiments of this application, if there is no content of a type module in an application, content of a previous type module of the type module may be displayed on the first interface. Further, if there is no content of the previous type module, content of a next type module of the type module is displayed. If there is no content of all type modules in the application, content of a first type module (that is, a type module arranged first in the second sorting sequence) in the previous application of the application is displayed; or if there is no content of all type modules of the application, a first type module in a next application of the application is displayed.

Referring to FIG. 5 again, the first application is an application 1 corresponding to an icon APP1, the application 1 has four type modules A, B, X, and Y, and a sorting manner (that is, the second sorting sequence) of the four type modules in the application 1 is A-B-X-Y; the second application is an application 2 corresponding to an icon APP2, the application 2 has three type modules A, B, and C, and a sorting manner (that is, the second sorting sequence) of the three type modules in the application 2 is A-B-C; an application 3 is an application corresponding to an icon APP3, the application 3 has four type modules A, B, X, and Z, and a sorting manner (that is, the second sorting sequence) of the four type modules in the application 3 is A-B-X-Z; and an application 4 is an application corresponding to an icon APP4, the application 4 has four type modules A, X, Y, and B, and a sorting manner (that is, the second sorting sequence) of the four type modules in the application 4 is A-X-Y-B. In FIG. 5, the type modules in the icons APP 1, APP2, APP3, and APP4 are arranged in a matrix form.

Referring to the foregoing example again, if content of the type module C in the application 2 is empty, the user performs upward sliding in a case that the first interface is an interface corresponding to the type module Y in the application 1. Because there is no type module that is in the application 2 and that is in a same column as the type module Y in the application 1, in response to the upward sliding operation performed by the user, content of the type module C in the application 2 is displayed. However, if the content of the type module C in the application 2 is empty, content of the type module B in the application 2 is displayed, and if the content of the type module B in the application 2 is empty, content of the type module A in the application 2 is displayed, and by analogy. That is, a non-empty type module that is in the application 2 and that is closest to a type module (that is, a type module corresponding to a dotted line box in FIG. 5) corresponding to the type module Y in the second application in the second sorting sequence is displayed.

Referring to the foregoing example again, if content of all type modules in the application 2 is empty, content of the type module Z that is in the application 3 and that is in a same column as the type module Y in the application 1 is displayed.

In this embodiment of this application, the interface content corresponding to the first type module in the second application is obtained in response to the first input, and in a case that the interface content corresponding to the first type module in the second application is empty, switching to an interface corresponding to the non-empty second type module that is in the second application and that is adjacent to the first type module in the second application can be quickly implemented. Therefore, the user can quickly switch from the first application to the second application. In this way, in a case that the user wants to view content of a type module corresponding to the first type module in the second application when viewing content in the first application, the user may quickly switch to the second application without exiting the first application and causing confusion, which is simple and convenient to operate, thereby improving user experience.

In some embodiments of this application, to implement switching between different type modules in a same application, after step 110, the information display method may further include:
receiving a fourth input performed by the user; and
displaying an interface corresponding to a fifth type module in the first application in response to the fourth input.

The fourth input may be performed to convert content of the first type module in the first application displayed on the first interface into content of the fifth type module in the first application. The fourth input may be a slide input, a tap input, a double-tap input, or the like performed by the user on the first interface, or may be a combination of at least two types of the foregoing inputs. This is not limited in this application.

The fifth type module is a non-empty type module that is in the first application and that is closest to the first type module in the first application in the second sorting sequence.

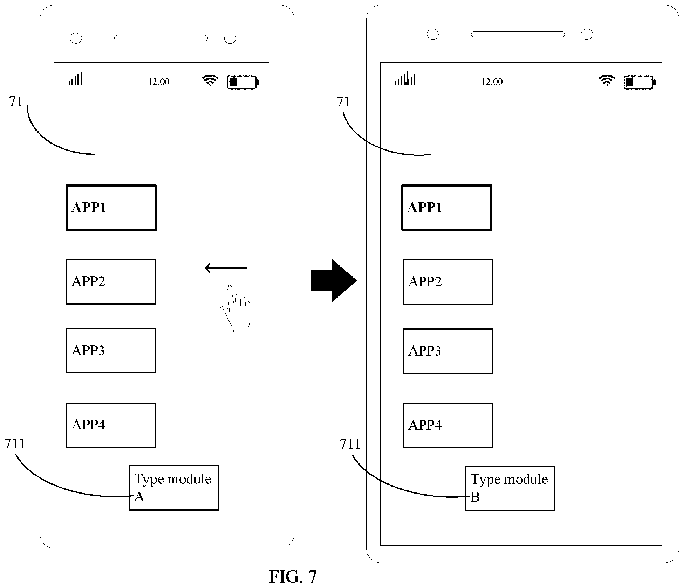

In an example, as shown in FIG. 7, the first application is an application 1 corresponding to an icon APP1, the application 1 has four type modules A, B, X, and Y, and a sorting manner (that is, the second sorting sequence) of the four type modules in the application 1 is A-B-X-Y. For example, the first type module is the type module A in the application 1, the fourth input is a slide input, and the fifth type module is the type module B. When the user performs leftward sliding on the first interface 71, in response to the slide input performed by the user, content of the type module A displayed on the first interface 71 is converted into content of the type module B, and the name of the type module A in an area 711 on the first interface is changed to the name of the type module B.

In another example, referring to the foregoing example again, if the content of the type module B in the application 1 is empty, and content of the type module X is not empty, in response to the leftward sliding input performed by the user on the first interface, the content of the type module A displayed on the first interface 71 is converted into the content of the type module X, that is, the type module B is skipped and the content of the type module X is directly displayed, and correspondingly, the name of the type module A in the area 711 on the first interface is changed to the name of the type module X.

In this embodiment of this application, the first interface corresponding to the first type module in the first application is displayed, the fourth input performed by the user is received, and the interface corresponding to the fifth type module whose content is not empty in the first application may be displayed in response to the fourth input, so that switching between different type modules in a same application is implemented, a user operation is saved, efficiency of switching between type modules is improved, and user experience is improved.

In some embodiments of this application, to facilitate the user to perform an operation on content displayed on the first interface, after step 110, the information display method may further include:
receiving a second input performed by the user on an icon corresponding to the first application;
displaying at least one function control in response to the second input;
receiving a third input performed by the user on a target function control in the at least one function control; and
in response to the third input, performing an operation corresponding to the target function control on content that is displayed on the first interface and that is corresponding to the first application.

The second input may be performed to display the at least one function control on the first interface, and the second input may be a slide input, a tap input, a double-tap input, or the like performed by the user on the icon corresponding to the first application, or may be a combination of at least two types of the foregoing inputs. This is not limited in this application.

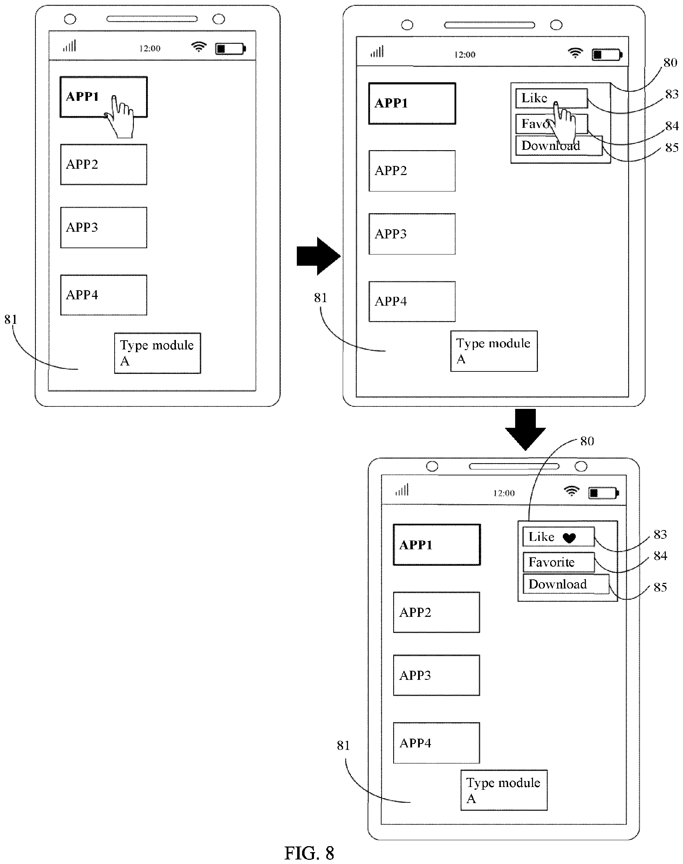

A function control may be a function control related to content that is displayed on the first interface and that is corresponding to the first application. For example, as shown in FIG. 8, a function control 80 may be a Like control 83, a Favorite control 84, and a Download control 85.

It should be noted that the function control shown in FIG. 8 is merely an example of this embodiment of this application. A person skilled in the art should know that the function control displayed on the first interface is not limited to the function control shown in FIG. 8.

The target function control may be one of the at least one function control.

The third input may be performed to perform an operation corresponding to the target function control on the content that is displayed on the first interface and that is corresponding to the first application. The third input may be a slide input, a tap input, a double-tap input, or the like performed by the user on the target function control, or may be a combination of at least two types of the foregoing inputs. This is not limited herein.

In an example, as shown in FIG. 8, the first application is an application 1 corresponding to an icon APP 1, the first type module is a type module A, and the target function control is a Like control 83. When the user taps the icon APP 1 on the first interface 81, function controls such as the Like control 83, the Favorite control 84, and the Download control 85 may be displayed. When the user taps the Like control 83, the user may give a like to the content that is displayed on the first interface and that is corresponding to the first application.

In this embodiment of this application, the first interface corresponding to the first type module in the first application is displayed, the at least one function control is displayed in response to the received second input performed by the user on the icon corresponding to the first application, and in response the received third input performed by the user on the target function control in the at least one function control, the operation corresponding to the target function control is performed on the content that is displayed on the first interface and that is corresponding to the first application. In this way, the user can perform an operation on the content that is displayed on the first interface and that is corresponding to the first application, thereby improving user experience.

In some embodiments of this application, to quickly implement switching between different type modules in a same application, after step 110, the information display method may further include:
receiving a fifth input performed by the user on a type module display icon on the first interface;
displaying a plurality of type modules of the first application in response to the fifth input;
receiving a sixth input performed by the user on a sixth type module; and
displaying an interface corresponding to the sixth type module in response to the sixth input.

The type module display icon may be an icon used to display each type module.

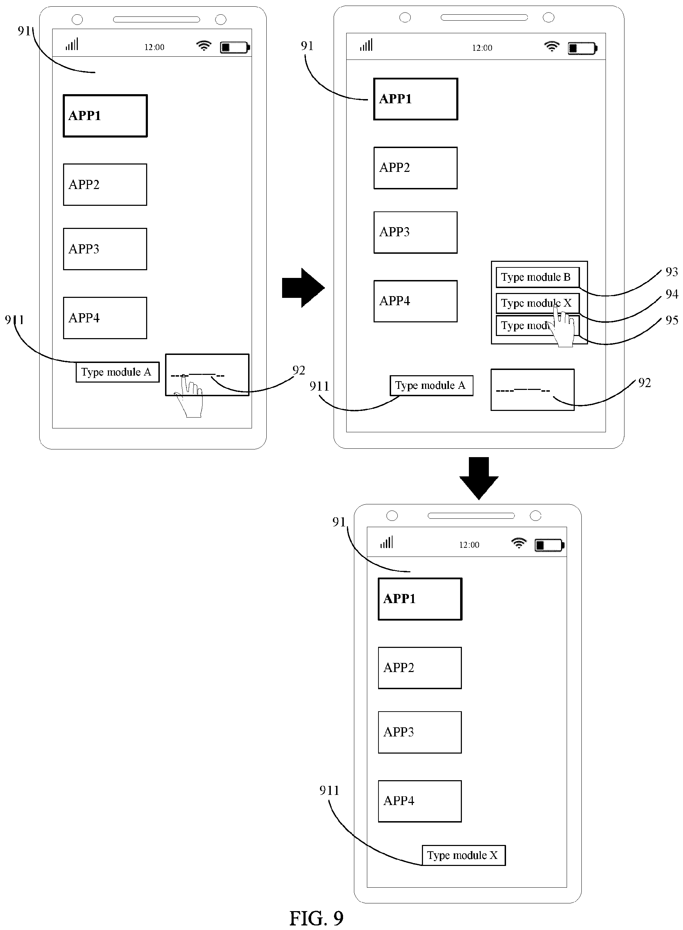

In an example, as shown in FIG. 9, there is an icon 92 that displays different type modules in a same application on the first interface 91, and the icon 92 may be a type module display icon.

The fifth input may be performed to display the plurality of type modules in the first application, and the fifth input may be a slide input, a tap input, a double-tap input, or the like performed by the user on a type module display identifier on the first interface, or may be a combination of at least two types of the foregoing inputs. This is not limited in this application.

The sixth type module may be one of the plurality of type modules in the first application.

The sixth input may be performed to display the interface corresponding to the sixth type module. The sixth input may be a slide input, a tap input, a double-tap input, or the like performed by the user on the sixth type module on the first interface, or may be a combination of at least two types of the foregoing inputs. This is not limited in this application.

In an example, as shown in FIG. 9, the first application is an application 1 corresponding to an icon APP1, the first type module is a type module A, the type module display icon is an icon 92, and the sixth type module is a type module B. When the user taps the icon 92 on the first interface 91, a type module B 93, a type module X 94, and a type module Y 95 in the application 1 may be displayed. When the user taps the type module X 94, content of the type module X may be displayed on the first interface, and correspondingly, the name of the type module A in an area 911 is changed to the name of the type module X.

In this embodiment of this application, the first interface corresponding to the first type module in the first application is displayed, the plurality of type modules in the first application may be quickly displayed in response to the fifth input performed on the type module display icon on the first interface, and then the interface corresponding to the sixth type module may be quickly displayed in response to the received sixth input performed by the user on the sixth type module. In this way, switching between different type modules in a same application can be quickly implemented, and the user does not need to continuously perform inputs in a sorting direction of all type modules in the first application on the first interface, that is, switching to a desired type module can be quickly implemented, thereby improving efficiency of switching between type modules, and improving user experience.

In some embodiments of this application, to facilitate the user to watch a video, after step 110, the information display method may further include:
receiving a seventh input performed by the user on display content on the first interface; and
playing the display content on the first interface in response to the seventh input.

The seventh input may be performed to play the display content on the first interface. The seventh input may be a slide input, a tap input, a double-tap input, or the like performed by the user on the display content on the first interface, or may be a combination of at least two types of the foregoing inputs. This is not limited in this application.

In an example, as shown in FIG. 2, if the display content on the first interface is a video frame image of the video 1 in the type module A in the application 1 corresponding to the icon APP1, after the user taps the video frame image of the video 1 displayed on the first interface, the video 1 is played on the first interface.

In this embodiment of this application, the first interface corresponding to the first type module in the first application is displayed, the seventh input performed by the user on the display content on the first interface is received, and the display content on the first interface is played in response to the seventh input. In this way, the user can directly watch the display content on the first interface, and the user does not need to access an application to open a corresponding type module and search for corresponding display content for watching, thereby improving efficiency of playing the display content on the first interface, and improving user experience.

It should be noted that, the information display method provided in the embodiments of this application may be performed by an information display apparatus, or a control module that is in the information display apparatus and that is configured to perform the information display method. In the embodiments of this application, an example in which the information display apparatus performs the information display method is used to describe the information display apparatus provided in the embodiments of this application.

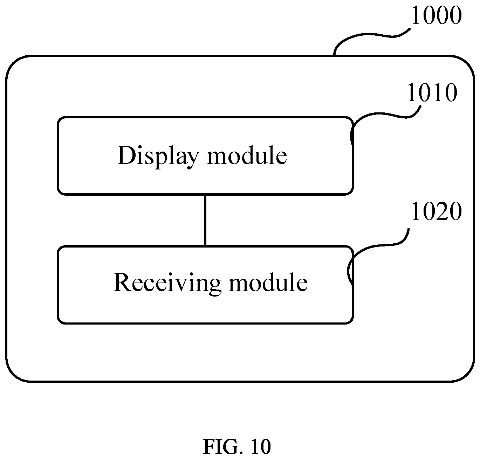

Based on a same invention concept as the foregoing information display method, this application further provides an information display apparatus, and the information display apparatus is applied to a server. The following describes in detail the information display apparatus provided in this embodiment of this application with reference to FIG. 10.

FIG. 10 is a structural block diagram of an information display apparatus according to an example embodiment.

As shown in FIG. 10, an information display apparatus 1000 may include:
a display module 1010, configured to display a first interface corresponding to a first type module in a first application; and
a receiving module 1020, configured to receive a first input performed by a user, and
the display module 1010 is further configured to display an interface corresponding to the first type module in a second application in response to the first input.

In this embodiment of this application, the display module displays a first interface corresponding to a first type module in a first application, the receiving module receives a first input performed by a user, and the display module displays an interface corresponding to the first type module in a second application in response to the first input. Therefore, when content corresponding to the first type module in the first application is displayed on the first interface, switching to the interface corresponding to the first type module in the second application can be quickly implemented in response to the first input performed by the user. Therefore, the user can quickly switch from the first application to the second application. In this way, according to the solution in this embodiment of this application, in a case that the user wants to view content of the second application when viewing content in the first application, the user may quickly switch to the second application without exiting the first application, which is simple and convenient to operate, thereby improving user experience.

In some embodiments of this application, the first interface includes N icons, an application corresponding to each icon has a plurality of type modules, and the N icons are arranged in a first sorting sequence; the first sorting sequence is determined based on a similarity between type modules in another application and type modules in a reference application, where the reference application is one of N applications corresponding to the N icons and is in a preset location in the first sorting sequence, and the another application is an application other than the reference application in the N applications; and an icon corresponding to the second application is adjacent to an icon corresponding to the first application in the first sorting sequence.

In some embodiments of this application, the display module 1010 may be further specifically configured to:
in response to the first input, obtain interface content corresponding to the first type module in the second application, and display the interface corresponding to the first type module in the second application in a case that the interface content corresponding to the first type module in the second application is not empty.

In some embodiments of this application, the receiving module 1020 may be further configured to receive a second input performed by the user on an icon corresponding to the first application;
the display module 1010 is further configured to display at least one function control in response to the second input;
the receiving module 1020 may be further configured to receive a third input performed by the user on a target function control in the at least one function control; and
the display module 1010 is further configured to: in response to the third input, perform an operation corresponding to the target function control on content that is displayed on the first interface and that is corresponding to the first application.

In some embodiments of this application, the display module 1010 may be further configured to: in a case that content of a target type module in a target application is updated, display updated content of the target type module, where the target application is one of N applications corresponding to N icons, and the target type module is one of a plurality of type modules in the target application.

In some embodiments of this application, a plurality of type modules in an application corresponding to each icon are arranged in a second sorting sequence.

In some embodiments of this application, the display module 1010 may be further specifically configured to: in response to the first input, obtain interface content corresponding to the first type module in the second application, and display an interface corresponding to a second type module in the second application in a case that the interface content corresponding to the first type module in the second application is empty, where
the second application includes the first type module and the second type module, the first type module is adjacent to the second type module in the second sorting sequence, and content of the interface corresponding to the second type module is not empty.

The information display apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), a teller machine, or a self-service machine. This is not specifically limited in this embodiment of this application.

The information display apparatus in this embodiment of this application may be an apparatus with an operating system. The operating system may be an Android (Android) operating system, an iOS operating system, or another possible operating system. This is not specifically limited in this embodiment of this application.

The information display apparatus provided in this embodiment of this application can implement the processes implemented in the method embodiments shown in FIG. 1 to FIG. 9. To avoid repetition, details are not described herein again.

An embodiment of the present invention further provides an electronic device, configured to perform the processes of the foregoing information display method embodiment, and a same technical effect can be achieved. To avoid repetition, details are not described herein again.

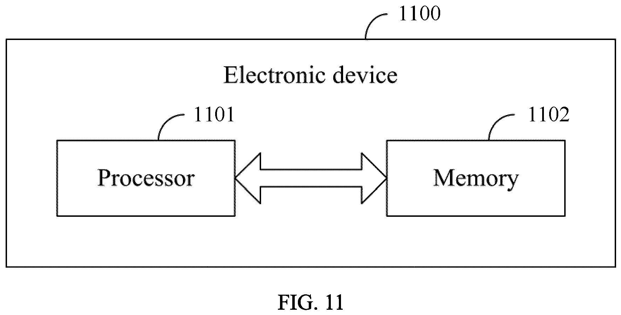

Optionally, as shown in FIG. 11, an embodiment of this application further provides an electronic device 1100, including a processor 1101, a memory 1102, and a program or an instruction that is stored in the memory 1102 and that can be run on the processor 1101. The program or the instruction is executed by the processor 1101 to implement the processes of the foregoing information display method embodiment, and a same technical effect can be achieved. To avoid repetition, details are not described herein again.

It should be noted that the electronic device in this embodiment of this application includes the mobile electronic device and the non-mobile electronic device.

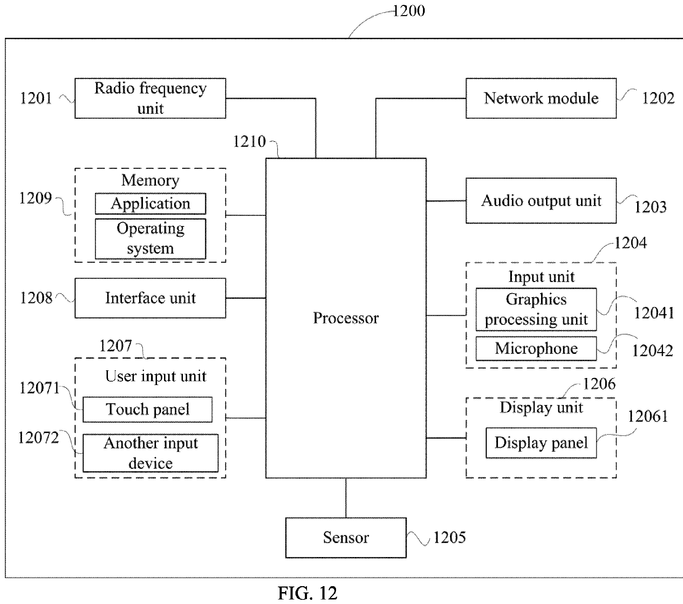

FIG. 12 is a schematic diagram of a hardware structure of an electronic device according to an embodiment of this application.

An electronic device 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art can understand that the electronic device 1200 may further include the power supply (for example, a battery) that supplies power to each component. The power supply may be logically connected to the processor 1210 by using a power supply management system, so as to manage functions such as charging, discharging, and power consumption by using the power supply management system. The structure of the electronic device shown in FIG. 12 does not constitute a limitation on the electronic device, and the electronic device may include more or fewer components than those shown in the figure, or combine some components, or have different component arrangements. Details are not described herein again.

The display unit 1206 is configured to display a first interface corresponding to a first type module in a first application; and
the user input unit 1207 is configured to receive a first input performed by a user.

The display unit 1206 is further configured to display an interface corresponding to the first type module in a second application in response to the first input.

In this way, a first interface corresponding to a first type module in a first application is displayed, a first input performed by a user is received, and an interface corresponding to the first type module in a second application is displayed in response to the first input. Therefore, when content corresponding to the first type module in the first application is displayed on the first interface, switching to the interface corresponding to the first type module in the second application can be quickly implemented in response to the first input performed by the user. Therefore, the user can quickly switch from the first application to the second application. In this way, according to the solution in this embodiment of this application, in a case that the user wants to view content of the second application when viewing content in the first application, the user may quickly switch to the second application without exiting the first application, which is simple and convenient to operate, thereby improving user experience.

Optionally, the first interface may include N icons, an application corresponding to each icon has a plurality of type modules, and the N icons are arranged in a first sorting sequence. The first sorting sequence is determined based on a similarity between type modules in another application and type modules in a reference application.

In this way, the first interface includes the N icons, the application corresponding to each icon has a plurality of type modules, the N icons are arranged in the first sorting sequence, and the first sorting sequence may be determined based on a similarity between type modules in another application and type modules in the reference application. Therefore, a sorting sequence of N application identifiers can be accurately determined.

Optionally, the display unit 1206 may be further configured to: in response to the first input, obtain interface content corresponding to the first type module in the second application, and display the interface corresponding to the first type module in the second application in a case that the interface content corresponding to the first type module in the second application is not empty.

In this way, the interface content corresponding to the first type module in the second application is obtained in response to the first input, and in a case that the interface content corresponding to the first type module in the second application is not empty, switching to the interface corresponding to the first type module in the second application can be quickly implemented. Therefore, the user can quickly switch from the first application to the second application. In this way, in a case that the user wants to view content of a type module corresponding to the first type module in the second application when viewing content in the first application, the user may quickly switch to the second application without exiting the first application, which is simple and convenient to operate, thereby improving user experience.

Optionally, the user input unit 1207 may be further configured to receive a second input performed by the user on an icon corresponding to the first application.

Optionally, the display unit 1206 may be further configured to display at least one function control in response to the second input.

Optionally, the user input unit 1207 may be further configured to receive a third input performed by the user on a target function control in the at least one function control.

Optionally, the display unit 1206 may be further configured to: in response to the third input, perform an operation corresponding to the target function control on content that is displayed on the first interface and that is corresponding to the first application.

In this way, the first interface corresponding to the first type module in the first application is displayed, the at least one function control is displayed in response to the received second input performed by the user on the icon corresponding to the first application, and in response the received third input performed by the user on the target function control in the at least one function control, the operation corresponding to the target function control is performed on the content that is displayed on the first interface and that is corresponding to the first application. In this way, the user can perform an operation on the content that is displayed on the first interface and that is corresponding to the first application, thereby improving user experience.

Optionally, the display unit 1206 may be further configured to: in a case that content of a target type module in a target application is updated, display updated content of the target type module.

In this way, in a case that the content of the target type module in the target application is updated, and the updated content of the target type module is displayed. Therefore, the user can intuitively view that the content of the target type module in the target application is updated and the specific updated content, and does not need to open applications and type modules one by one to view that content of a type module in which application is updated, thereby improving user experience.

Optionally, the display unit 1206 may further obtain, in response to the first input, interface content corresponding to the first type module in the second application, and display an interface corresponding to a second type module in the second application in a case that the interface content corresponding to the first type module in the second application is empty.

In this way, the interface content corresponding to the first type module in the second application is obtained in response to the first input, and in a case that the interface content corresponding to the first type module in the second application is empty, switching to an interface corresponding to the non-empty second type module that is in the second application and that is adjacent to the first type module in the second application can be quickly implemented. Therefore, the user can quickly switch from the first application to the second application. In this way, in a case that the user wants to view content of a type module corresponding to the first type module in the second application when viewing content in the first application, the user may quickly switch to the second application without exiting the first application and causing confusion, which is simple and convenient to operate, thereby improving user experience.

It should be understood that, in this embodiment of this application, the input unit 1204 may include a graphics processing unit (Graphics Processing Unit, GPU) 12041 and a microphone 12042, and the graphics processing unit 12041 processes image data of a still image or a video that is obtained by an image capturing apparatus (for example, a camera) in a video capturing mode or an image capturing mode. The display unit 1206 may include a display panel 12061. The display panel 12061 may be configured in a form of a liquid crystal display, an organic light emitting diode, or the like. The user input unit 1207 may include a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a functional button (such as a volume control button or a power on/off button), a trackball, a mouse, and a joystick. Details are not described herein. The memory 1209 may be configured to store a software program and various data, including but not limited to an application and an operating system. An application processor and a modem processor may be integrated into the processor 1210, the application processor mainly processes an operating system, a user interface, an application program, and the like, and the modem processor mainly processes wireless communication. It can be understood that, alternatively, the modem processor may not be integrated into the processor 1210.

An embodiment of this application further provides a readable storage medium. The readable storage medium stores a program or an instruction, and the program or the instruction is executed by a processor to implement the processes in the foregoing information display method embodiment, and a same technical effect can be achieved. To avoid repetition, details are not described herein again.

The processor is a processor in the electronic device in the foregoing embodiment. The readable storage medium includes a computer readable storage medium, for example, a read-only memory (Read-Only Memory, ROM), a random access memory (Random Access Memory, RAM), a magnetic disk, or an optical disc.

An embodiment of the present invention further provides a computer program product. The computer program product may be executed by a processor to implement the processes of the foregoing information display method embodiment, and a same technical effect can be achieved. To avoid repetition, details are not described herein again.

An embodiment of this application further provides a chip. The chip includes a processor and a communication interface, the communication interface is coupled to the processor, and the processor is configured to run a program or an instruction to implement the processes of the foregoing information display method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially or the part contributing to the related art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, a network device, or the like) to perform the methods described in the embodiments of this application.

The foregoing descriptions are merely preferred embodiments of this application, and are not intended to limit this application. For a person skilled in the art, various alterations and changes may be made in the embodiments of this application. Any modification, equivalent replacement, or improvement made without departing from the spirit and principle of this application shall fall within the protection scope of this application.

It should be understood by a person skilled in the art that the foregoing embodiments are merely exemplary rather than restrictive. Different technical features in different embodiments may be combined to achieve beneficial effects. On the basis of studying the accompanying drawings, the specifications, and the claims, a person skilled in the art shall be able to understand and implement other modified embodiments of the disclosed embodiments. In the claims, the term "include" does not exclude other apparatuses or steps; when an article is not modified with a quantifier, it is intended to include one/one type or a plurality of/a plurality of types of articles, and an article can be used interchangeably with "one/one type or a plurality of/a plurality of types of articles"; and the terms "first" and "second" are used to indicate names rather than to indicate any particular order. None of the reference signs in the claims shall be construed as a limitation on the protection scope. A plurality of functions in the claims may be implemented by a single hardware or software module. Some technical features in different dependent claims do not mean that these technical features cannot be combined to achieve beneficial effects.

## Claims

1. An information display method, comprising:
displaying a first interface corresponding to a first type module in a first application;
receiving a first input performed by a user; and
displaying an interface corresponding to the first type module in a second application in response to the first input.

2. The method according to claim 1, wherein the first interface comprises N icons, an application corresponding to each icon has a plurality of type modules, and the N icons are arranged in a first sorting sequence;
the first sorting sequence is determined based on a similarity between type modules in another application and type modules in a reference application, wherein the reference application is one of N applications corresponding to the N icons and is in a preset location in the first sorting sequence, and the another application is an application other than the reference application in the N applications; and
an icon corresponding to the second application is adjacent to an icon corresponding to the first application in the first sorting sequence.

3. The method according to claim 2, wherein the displaying an interface type module corresponding to the first type module in a second application in response to the first input comprises:
in response to the first input, obtaining interface content corresponding to the first type module in the second application, and displaying an interface corresponding to a first type module in a third application in a case that the interface content corresponding to the first type module in the second application is empty.

4. The method according to claim 1, wherein after the displaying a first interface corresponding to a first type module in a first application, the method further comprises:
receiving a second input performed by the user on an icon corresponding to the first application;
displaying at least one function control in response to the second input;
receiving a third input performed by the user on a target function control in the at least one function control; and
in response to the third input, performing an operation corresponding to the target function control on content that is displayed on the first interface and that is corresponding to the first application.

5. The method according to claim 1, wherein after the displaying a first interface corresponding to a first type module in a first application, the method further comprises:
in a case that content of a target type module in a target application is updated, displaying updated content of the target type module, wherein
the target application is one of N applications corresponding to N icons, and the target type module is one of a plurality of type modules in the target application.

6. The method according to claim 1, wherein a plurality of type modules in an application corresponding to each icon are arranged in a second sorting sequence; and
the displaying an interface type module corresponding to the first type module in a second application in response to the first input comprises:
in response to the first input, obtaining interface content corresponding to the first type module in the second application, and displaying an interface corresponding to a second type module in the second application in a case that the interface content corresponding to the first type module in the second application is empty, wherein
the second application comprises the first type module and the second type module, the first type module is adjacent to the second type module in the second sorting sequence, and content of the interface corresponding to the second type module is not empty.

7. An information display apparatus, comprising:
a display module, configured to display a first interface corresponding to a first type module in a first application; and
a receiving module, configured to receive a first input performed by a user, wherein
the display module is further configured to display an interface corresponding to the first type module in a second application in response to the first input.

8. The apparatus according to claim 7, wherein the first interface comprises N icons, an application corresponding to each icon has a plurality of type modules, and the N icons are arranged in a first sorting sequence;
the first sorting sequence is determined based on a similarity between type modules in another application and type modules in a reference application, wherein the reference application is one of N applications corresponding to the N icons and is in a preset location in the first sorting sequence, and the another application is an application other than the reference application in the N applications; and
an icon corresponding to the second application is adjacent to an icon corresponding to the first application in the first sorting sequence.

9. The apparatus according to claim 8, wherein the display module is configured to:
in response to the first input, obtain interface content corresponding to the first type module in the second application, and display an interface corresponding to a first type module in a third application in a case that the interface content corresponding to the first type module in the second application is empty, wherein
an icon corresponding to the third application is adjacent to the icon corresponding to the first application in the first sorting sequence.

10. The apparatus according to claim 7, wherein the receiving module is further configured to receive a second input performed by the user on an icon corresponding to the first application;
the display module is further configured to display at least one function control in response to the second input;
the receiving module is further configured to receive a third input performed by the user on a target function control in the at least one function control; and
the display module is further configured to: in response to the third input, perform an operation corresponding to the target function control on content that is displayed on the first interface and that is corresponding to the first application.

11. The apparatus according to claim 7, wherein the display module is further configured to:
in a case that content of a target type module in a target application is updated, display updated content of the target type module, wherein
the target application is one of N applications corresponding to N icons, and the target type module is one of a plurality of type modules in the target application.

12. The apparatus according to claim 7, wherein a plurality of type modules in an application corresponding to each icon are arranged in a second sorting sequence; and
the display module is further configured to:
in response to the first input, obtain interface content corresponding to the first type module in the second application, and display an interface corresponding to a second type module in the second application in a case that the interface content corresponding to the first type module in the second application is empty, wherein
the second application comprises the first type module and the second type module, the first type module is adjacent to the second type module in the second sorting sequence, and content of the interface corresponding to the second type module is not empty.

13. An electronic device, comprising a processor, a memory, and a program or an instruction that is stored in the memory and that can be run on the processor, wherein the program or the instruction is executed by the processor to implement the steps of the information display method according to any one of claims 1 to 6.

14. An electronic device, configured to perform the steps of the information display method according to any one of claims 1 to 6.

15. A readable storage medium, wherein a program or an instruction is stored on the readable storage medium, and the program or the instruction is executed by a processor to implement the steps of the information display method according to any one of claims 1 to 6.

16. A computer program product, wherein the computer program product may be executed by a processor to implement the steps of the information display method according to any one of claims 1 to 6.

17. A chip, wherein the chip comprises a processor and a communication interface, the communication interface is coupled to the processor, the processor is configured to run a program or an instruction, and the program or the instruction is executed by the processor to implement the steps of the information display method according to any one of claims 1 to 6.
